# EUROPEAN PATENT APPLICATION

(11) **EP 2 387 052 A2**
(43) Date of publication of application: **16.11.2011**
(21) Application number: 10252166.3
(22) Date of filing: 20.12.2010
(51) Int. Cl.: H01G 9/20

(54) **Photoelectric conversion module**

(30) Priority: 14.05.2010 US 334989 P
(71) Applicant: Samsung SDI Co., Ltd., Yongin-si, Gyeonggi-do (KR)
(72) Inventor: Yang, Nam-Choul, Gyeonggi-do (KR)
(74) Representative: Mounteney, Simon James

(57) **Abstract**

A photoelectric conversion module including such an electrolyte inlet that an electrolyte is simultaneously introduced to at least two neighboring photoelectric cells, in order to reduce the number of electrolyte inlets required for filling a plurality of photoelectric cells.

## Description

The present invention relates to a photoelectric conversion module for converting solar energy into electric energy.

Recently, solar energy has received considerable attention as a renewable energy for replacing petroleum, coal, or natural gas. A solar cell using solar energy is usually classified as a silicon solar cell or a compound semiconductor solar cell, according to the material used to form the solar cell. Monocrystalline and polycrystalline silicon solar cells, amorphous silicon solar cells, and so on have been widely used and sold. Silicon solar cells use semiconductor materials, and are based on a photoelectric conversion principle.

A dye-sensitized solar cell (DSSC) is a solar cell based on a photoelectrochemical conversion mechanism using a principle of photosynthesis. Since a DSSC has a higher theoretical limitation conversion efficiency than that of a typical silicon solar cell, there are more opportunities for increasing the conversion efficiency of a DSSC, and manufacturing costs of a DSSC may be 1/5 that of a typical silicon solar cell. In addition, DSSCs are expected to be highly developed due to their wide applicability.

When a DSSC absorbs sunlight, electrons in dye molecules are transited, and the electrons are injected into a conduction band of a semiconductor oxide. The injected electrons move to a conductive film through a grain boundary between particles of an oxide electrode, and holes formed in the dye molecules are reduced by an electrolyte contained between opposites substrates sealed by a sealer, thereby generating a current.

The present invention sets out to provide a photoelectric conversion module including electrolyte inlets for injecting an electrolyte into a plurality of unit cells, wherein the number of the electrolyte inlets is reduced so as to improve durability and manufacturing yield and to reduce manufacturing costs.

Accordingly, a first aspect of the invention provides a photoelectric conversion model as set out in Claim 1. Preferred features of this aspect of the invention are set out in Claims 2 to 11.

A second aspect of the invention provides a method of forming a photoelectric conversion module as set out in Claim 12. Preferred features of this aspect of the invention are set out in Claims 13 to 15.

Embodiments of the invention will be described below by way of example and with reference to the accompanying drawings wherein:-
FIG. 1 is a plan view of a photoelectric conversion module according to an embodiment of the present invention;
FIG. 2 is a cross-sectional view of the photoelectric conversion module of FIG. 1 taken along a line II-II' of FIG. 1;
FIG. 3 is an exploded perspective view of a photoelectric conversion module according to an embodiment of the present invention;
FIG. 4 is a schematic plan view showing spreading directions of an electrolyte that is injected through electrolyte inlets of a photoelectric conversion module, according to an embodiment of the present invention;
FIG. 5 is a cross-sectional view of the photoelectric conversion module of FIG. 3 taken along a line V-V' of FIG. 3;
FIG. 6 is an exploded perspective view of a photoelectric conversion module according to another embodiment of the present invention;
FIG. 7 is an exploded perspective view of a photoelectric conversion module according to a modified embodiment of FIG. 6;
FIG. 8 is a plan view showing a case where electrolyte inlets of the photoelectric conversion module of FIG. 6 are sealed, according to an embodiment of the present invention;
FIG. 9 is a schematic plan view showing spreading directions of an electrolyte that is injected through electrolyte inlets of a photoelectric conversion module, according to yet another embodiment of the present invention;
FIG. 10 is a plan view showing a case where an electrolyte inlet and an opened portion are sealed in the photoelectric conversion module of FIG. 9; and
FIG. 11 is a flow chart showing a method of manufacturing a photoelectric conversion module, according to embodiments of the present invention.

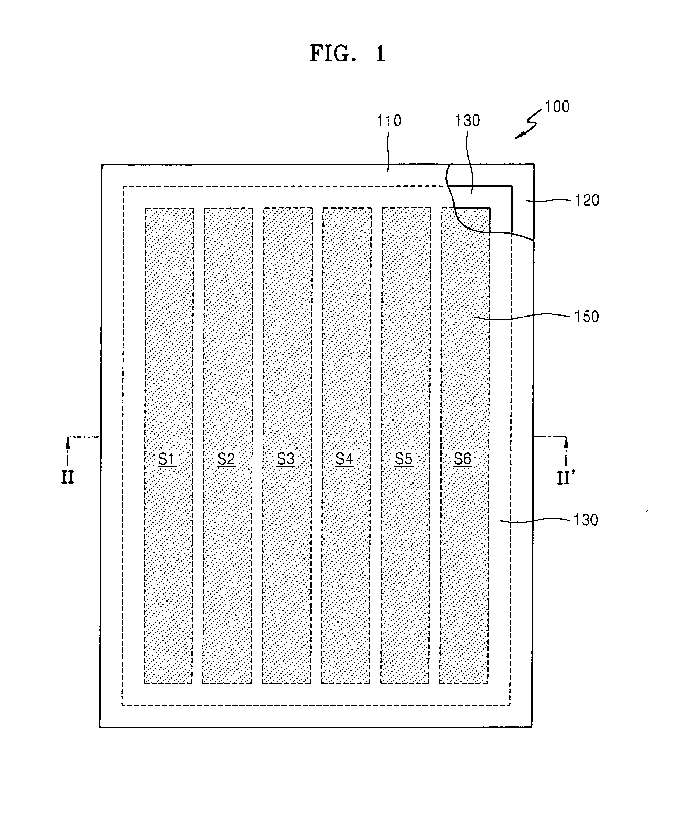

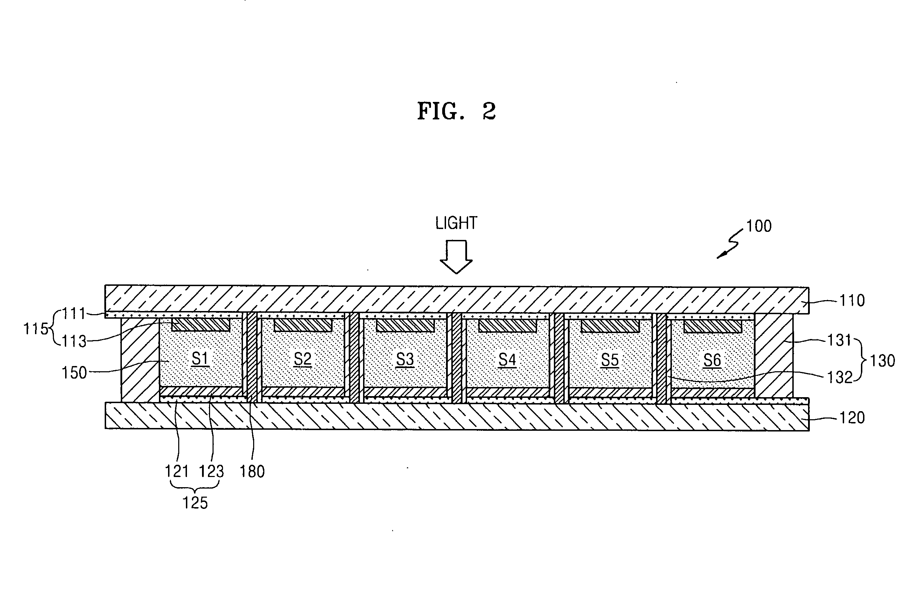

FIG. 1 is a plan view of a photoelectric conversion module 100 according to an embodiment of the present invention. FIG. 2 is a cross-sectional view of the photoelectric conversion module 100 taken along a line II-II' of FIG. 1.

Referring to FIGS. 1 and 2, the photoelectric conversion module 100 includes a plurality of photoelectric cells S1, S2, S3, S4, S5, and S6, and the photoelectric cells S1, S2, S3, S4, S5, and S6 are separated by sealing members 130. The sealing members 130 therefore serve as dividing walls between the cells. Other forms of wall may be used, if preferred.

The photoelectric cells S1, S2, S3, S4, S5, and S6 are respectively filled with an electrolyte 150. The electrolyte 150 filled in the photoelectric cells S1, S2, S3, S4, S5, and S6 is injected through an electrolyte inlet (not shown), and by sealing the electrolyte inlet, the electrolyte 150 does not leak out of the photoelectric cells S1, S2, S3, S4, S5, and S6.

Referring to FIG. 2, the photoelectric conversion module 100 includes a light receiving substrate 110 and an opposite substrate 120 that face each other. The photoelectric cells S1, S2, S3, S4, S5, and S6, which are separated from each other by the sealing members 130, are formed between the light receiving substrate 110 and the opposite substrate 120.

A photoelectrode 111 and an opposite electrode 121 are formed on the light receiving substrate 110 and the opposite substrate 120, respectively. The light receiving substrate 110 and the opposite substrate 120 are disposed a predetermined interval away from each other by interposing the sealing members 130 between the light receiving substrate 110 and the opposite substrate 120. A semiconductor oxide layer 113 onto which photosensitive dye that may be excited by light is adsorbed is formed on the photoelectrode 111. The electrolyte 150 is filled between the semiconductor oxide layer 113 and the opposite electrode 121.

The light receiving substrate 110 may be formed of a transparent material, for example, a material having a relatively high light transmittance. For example, the light receiving substrate 110 may be configured as a glass substrate formed of glass or a resin film. Since a resin film is usually flexible, a resin film as the light receiving substrate 110 is appropriate for achieving flexibility.

The photoelectrode 111 functions as a negative electrode of the photoelectric conversion module 100, and is part of a current path that receives electrons generated according to photoelectric conversion. The photoelectrode 111 may be formed of a transparent conducting oxide (TCO) having a relatively high electrical conductivity and a relatively high optical transparency, such as an indium tin oxide (ITO), a fluorine-doped tin oxide (FTO), or an antimony tin oxide (ATO). The photoelectrode 111 may further include a metal electrode formed of metal having an excellent electrical conductivity, such as gold (Ag), silver (Au), or aluminum (Al). The metal electrode is introduced in order to reduce an electric resistance of the photoelectrode 111, and may be formed in a stripe pattern or a mesh pattern.

The semiconductor oxide layer 113 may be formed of a semiconductor, for example, a metal oxide including cadmium (Cd), zinc (Zn), indium (In), lead (Pb), molybdenum (Mo), tungsten (W), antimony (Sb), titanium (Ti), silver (Ag), manganese (Mn), tin (Sn), zirconium (Zr), strontium (Sr), gallium (Ga), silicon (Si), or chromium (Cr). The semiconductor oxide layer 113 adsorbs a photosensitive dye (not shown) to increase its photoelectric conversion efficiency. For example, the semiconductor oxide layer 113 may be formed by coating a paste having semiconductor particles each having a diameter within about 5 nm to about 1000 nm on the photoelectrode 111 and then performing a thermal process and/or compression process for applying a predetermined amount of heat or pressure.

The photosensitive dye adsorbed onto the semiconductor oxide layer 113 absorbs light transmitted through the light receiving substrate 110, and electrons of the photosensitive dye are excited from a ground state to an excitation state when the photosensitive dye absorbs light. The excited electrons are transited to a conduction band of the semiconductor oxide layer 113, are transported to the photoelectrode 111 through the semiconductor oxide layer 113, and then are extracted out of the photoelectric conversion module 100 through the photoelectrode 111 and thus a driving current for driving an external circuit is produced.

For example, the photosensitive dye adsorbed onto the semiconductor oxide layer 113 includes a molecule that absorbs visible light and causes electrons in a light excitation state to quickly move to the semiconductor oxide layer 113. The photosensitive dye may have any one of a liquid state, a semiliquid gel state, and a solid state. For example, the photosensitive dye adsorbed onto the semiconductor oxide layer 113 may be a ruthenium-based photosensitive dye. The light receiving substrate 110 on which the semiconductor oxide layer 113 is formed may be immersed in a solution including a predetermined photosensitive dye to obtain the semiconductor oxide layer 113 onto which the predetermined photosensitive dye is adsorbed.

The electrolyte 150 may be a redox electrolyte including an oxidizer and reducer pair, and may be a solid-type electrolyte, a gel-type electrolyte, or a liquid-type electrolyte.

The opposite substrate 120 facing the light receiving substrate 110 does not have to be transparent.

However, the opposite substrate 120 may be formed of a transparent material so as to increase its photoelectric conversion efficiency, and may be formed of the same material as the light receiving substrate 110. In particular, when the photoelectric conversion module 100 is used as a building integrated photovoltaic (BIPV) system in a structure such as a window frame, both sides of the photoelectric conversion module 100 may be transparent so as not to prevent light from being introduced indoors. For example, the opposite electrode 121 may be formed of a TCO having a relatively high electrical conductivity and (a relatively high) optical transparency, such as an ITO, an FTO, or an ATO.

The opposite electrode 121 may further include a metal electrode formed of a metal having excellent electrical conductivity, such as Ag, Au, or Al. The metal electrode is introduced in order to decrease an electric resistance of the opposite electrode 121, and may be formed in a stripe pattern or a mesh pattern.

The opposite electrode 121 functions as a positive electrode of the photoelectric conversion module 100. Electrons excited by light emitted through the light receiving substrate 110 are extracted out of the photoelectric conversion module 100 through the photoelectrode 111. The photosensitive dye losing electrons is reduced again by receiving electrons provided by oxidation of the electrolytes 150. The oxidized electrolytes 150 are reduced again by receiving electrons that have reached the opposite electrode 121 through an external circuit, thereby completing the photoelectric conversion.

A catalyst layer 123 is formed on the opposite electrode 121. The catalyst layer 123 may be formed of a material that functions as a reduction catalyst for providing electrons, and may be formed of a metal such as platinum (Pt), silver (Ag), gold (Au), copper (Cu), or aluminum (Al), a metal oxide such as tin oxide, or a carbon-based material such as graphite.

Adhesive members 180 are disposed between the photoelectric cells S1, S2, S3, S4, S5, and S6 so as to adhere and seal the photoelectric cells S1, S2, S3, S4, S5, and S6 to each other. Referring to FIG. 2, the photoelectric cells S1, S2, S3, S4, S5, and S6 are adhered in parallel to each other by the adhesive members 180. The adhesive members 180 are formed between the sealing members 130. The adhesive members 180 extend vertically, so as to contact the photoelectrode 111 and the opposite electrode 121 respectively disposed at upper and lower locations, and connect a plurality of the photoelectrodes 111 and a plurality of the opposite electrodes 121 that are disposed between the photoelectric cells S1, S2, S3, S4, S5, and S6 in parallel. The adhesive members 180 may be formed of a metal material having an excellent conductivity. For example, the adhesive members 180 are formed by filling a conductive paste into an accommodation space defined by the sealing members 130.

### [First Embodiment]

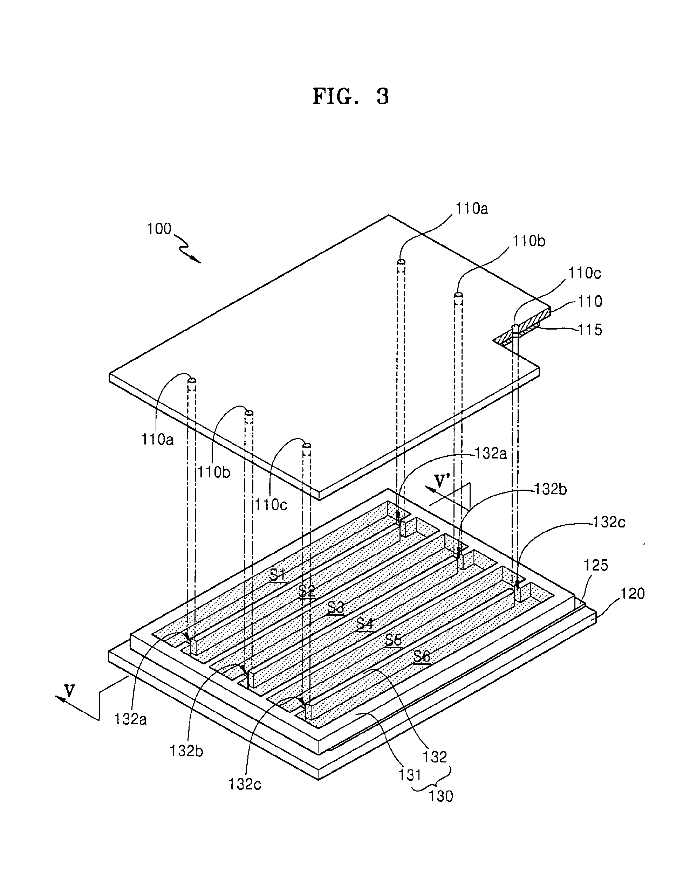

FIG. 3 is an exploded perspective view of the photoelectric conversion module 100 according to an embodiment of the present invention. Referring to FIG. 3, electrolyte inlets 110a, 110b, and 110c are formed respectively between neighboring photoelectric cells S1 and S2, and more particularly, so as to correspond to sealing members 132 separating the neighboring photoelectric cells S1 and S2. Portions of the sealing members 132 corresponding to the electrolyte inlets 110a, 110b, and 110c are open so that a fluid may flow between the neighboring photoelectric cells S1 and S2. Thus, only the electrolyte inlets 110a, 110b, and 110c are formed for six photoelectric cells. According to the present embodiment, the number of electrolyte inlets may be half the number of electrolyte inlets in Comparative Example (not shown), wherein 12 electrolyte inlets are respectively in photoelectric cells.

In FIG. 3, the electrolyte inlets 110a, 110b, and 110c are each disposed at both ends of the photoelectric cells S1, S2, S3, S4, S5, and S6, but the present embodiment is not limited thereto. Alternatively, the electrolyte inlets 110a, 110b, and 110c may each be disposed at only one end of the photoelectric cell S1, S2, S3, S4, S5, or S6. In this case, since three electrolyte inlets are formed for six photoelectric cells, the number of electrolyte inlets is half the number of electrolyte inlets in Comparative Example, wherein 6 electrolyte inlets are respectively formed in photoelectric cells.

In FIG. 3, the electrolyte inlets 110a, 110b, and 110c are formed in the light receiving substrate 110, but the present embodiment is not limited. Alternatively, electrolyte inlets may be formed in the opposite substrate 120.

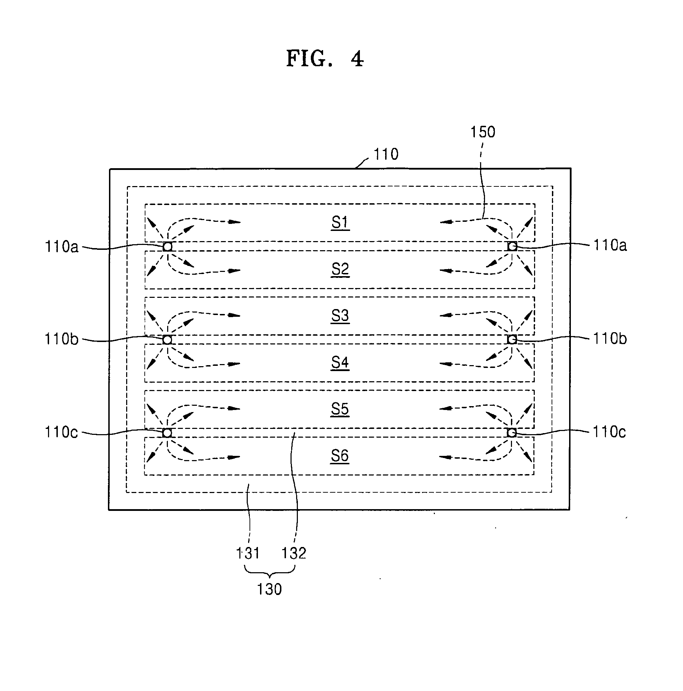

FIG. 4 is a schematic plan view showing spreading directions of the electrolyte 150 injected through the electrolyte inlets 110a, 110b, and 110c in the photoelectric conversion module 100, according to an embodiment of the present invention. Referring to FIG. 4, the electrolyte 150 injected through an electrolyte inlet 110a that is positioned at a right uppermost portion of the light receiving substrate 110 may move to the photoelectric cell S2 as well as the photoelectric cell S1. Accordingly, according to the present embodiment, even if the number of the electrolyte inlets 110a, 110b, and 110c is half the number of electrolyte inlets in Comparative Example, the same step of injecting an electrolyte may be performed.

The electrolyte inlets 110a, 110b and 110c need to be sealed so as to prevent the electrolyte 150 from leaking, and may be sealed by fillers 170 and/or cap members 160. Thus, as the number of electrolyte inlets is increased, defects may be further formed, thereby reducing product reliability. In addition, since holes needs to be made through the light receiving substrate 100 so as to form electrolyte inlets, as the number of the electrolyte inlets is increased, manufacturing cost and time of a photoelectric conversion module may be further increased. According to the present embodiment, since the number of the electrolyte inlets may be reduced by half of that in a typical case, product reliability may be improved, and manufacturing cost and time of the photoelectric conversion module 100 may be reduced.

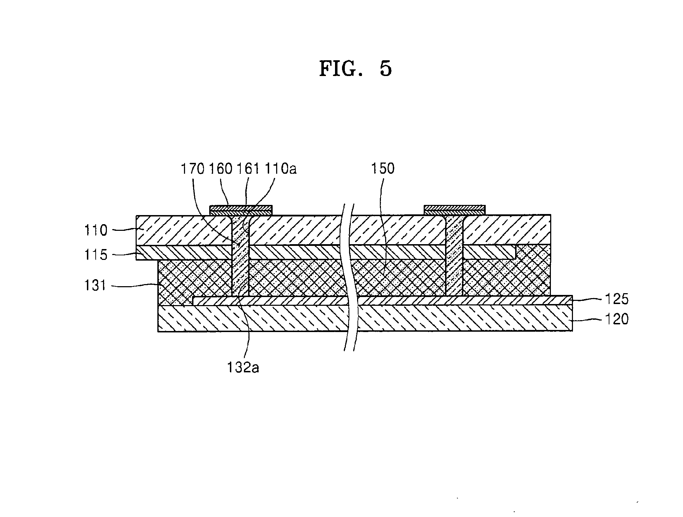

FIG. 5 is a cross-sectional view of the photoelectric conversion module 100 taken along a line V-V' of FIG. 3. When the electrolyte 150 is filled into the neighboring photoelectric cells S1 and S2 respectively through the electrolyte inlets 110a, 110b, and 110c, as shown in FIG. 4, the neighboring photoelectric cells S1 and S2 need to be sealed. Opened portions 132a, 132b, and 132c of the sealing members 130 correspond to the electrolyte inlets 110a, 110b, and 110c and are filled with the fillers 170, and then the fillers 170 are hardened to separate the neighboring photoelectric cells S1 and S2. The discontinuities defined by the hardened fillers 170 in the openings 132a, b, c, of the sealing members 130 therefore close off the cells S1 and S2 with respect to each other. In addition, the electrolyte inlet 110a is filled with the filler 170, and then the filler 170 is hardened so as prevent the electrolyte 150 from leaking.

The filler 170 may be an absorption filler ('the absorption filler 170'). The absorption filler 170 adsorbs external moisture so as to prevent external harmful moisture from penetrating into the photoelectric conversion module 100. In addition, the absorption filler 170 prevents the electrolytes 150 from volatizing or leaking.

The absorption filler 170 includes an absorption agent having an adsorption property with respect to moisture, and a resin-based material for containing the absorption agent and for sealing the electrolyte inlets 110a, 110b, and 110c. The resin-based material may be any material for sealing the electrolyte inlets 110a, 110b, and 110c. In addition, a material having a fluidity that varies according to a temperature environment may be selected as the resin-based material. For example, under a high temperature environment, the material has sufficient fluidity so as to be injected through the electrolyte inlets 110a, 110b, and 110c. Under a normal stepal temperature environment, the material is hardened to seal the electrolyte inlets 110a, 110b, and 110c. After the electrolyte 150 is injected, the absorption fillers 170 heated to a high temperature are injected into the electrolyte inlets 110a, 110b, and 110c by using a pressurizer such as a syringe, and the absorption fillers 170 are cooled to a predetermined temperature to be hardened and firmly attached to internal walls of the electrolyte inlets 110a, 110b, and 110c.

Although not illustrated in FIG. 5, the absorption fillers 170 are poured into the electrolyte inlets 110a, 110b, and 110c and spread out between the light receiving substrate 110 and the opposite substrate 120. That is, the absorption filler 170 may have a shape ("⊥") including a first portion filled in the electrolyte inlets 110a, 110b, and 110c, and a second portion extending from the first portion in radial directions between the light receiving substrate 110 and the opposite substrate 120. As such, since the absorption fillers 170 are formed to spread out between the light receiving substrate 110 and the opposite substrate 120, an adhesive strength of the absorption fillers 170 is determined by an adhesive area of the absorption fillers 170, and is strengthened when the adhesive area is increase, thereby effectively preventing the electrolyte 150 from leaking.

The electrolyte inlets 110a, 110b, and 110c may be further sealed by the cap members 160. The cap members 160 may be formed of a material through which harmful components such as oxygen and moisture do not penetrate. For example, the cap members 160 may be formed of a glass film or a metal film. The cap members 160 may be adhered to peripheral portions of the electrolyte inlets 110a, 110b, and 110c formed in the light receiving substrate 110 by using adhesive agents 161. A resin-based film may be used as the adhesive agent 161. The cap members 160 together with the fillers 170 filled in the electrolyte inlets 110a, 110b, and 110c may doubly seal the electrolyte inlets 110a, 110b, and 110c, thereby effectively preventing the electrolyte 150 from leaking.

### [Second Embodiment]

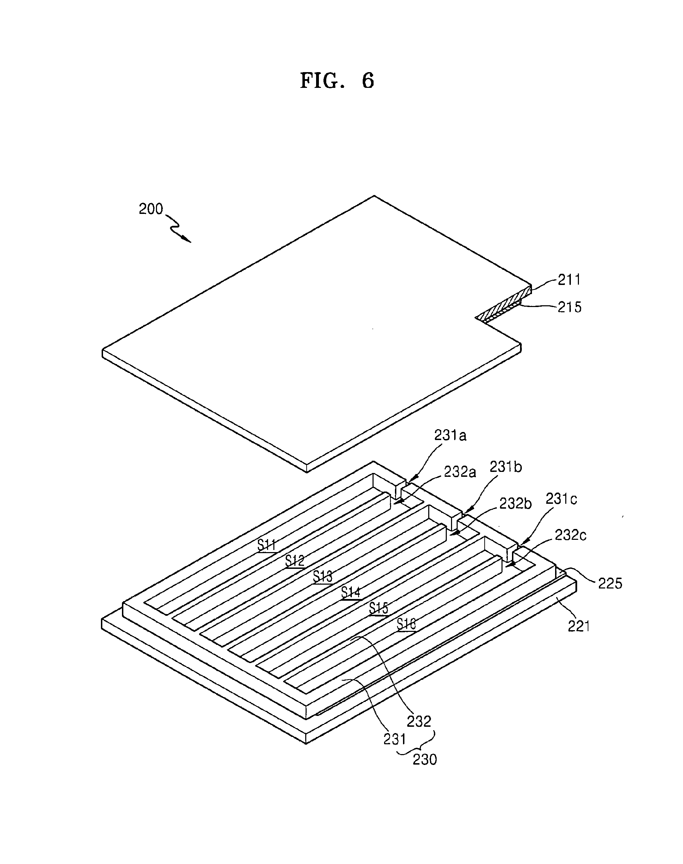

FIG. 6 is an exploded perspective view of a photoelectric conversion module 200 according to another embodiment of the present invention. Referring to FIG. 6, electrolyte inlets 231a, 231b, and 231c are respectively formed at one end of each of sealing members 232 formed in a longitudinal direction of neighboring photoelectric cells S11 and S12 so that an electrolyte 250 injected through the electrolyte inlets 231 a, 231 b, and 231 c formed at one side of the photoelectric conversion module 200 may be introduced to the neighboring photoelectric cells S11 and S12. In addition, the sealing members 232 separating the neighboring photoelectric cells S11 and S12 include opened portions 232a, 232b, and 232c so that a fluid may flow between the neighboring photoelectric cells S11 and S12. Thus, only three electrolyte inlets 231 a, 231 b, and 231c are formed for the six photoelectric cells S11, S12, S13, S14, S15, and S16. According to the present embodiment, the number of electrolyte inlets may be a quarter of the number of electrolyte inlets in Comparative Example, wherein 12 electrolyte inlets are respectively formed in photoelectric cells.

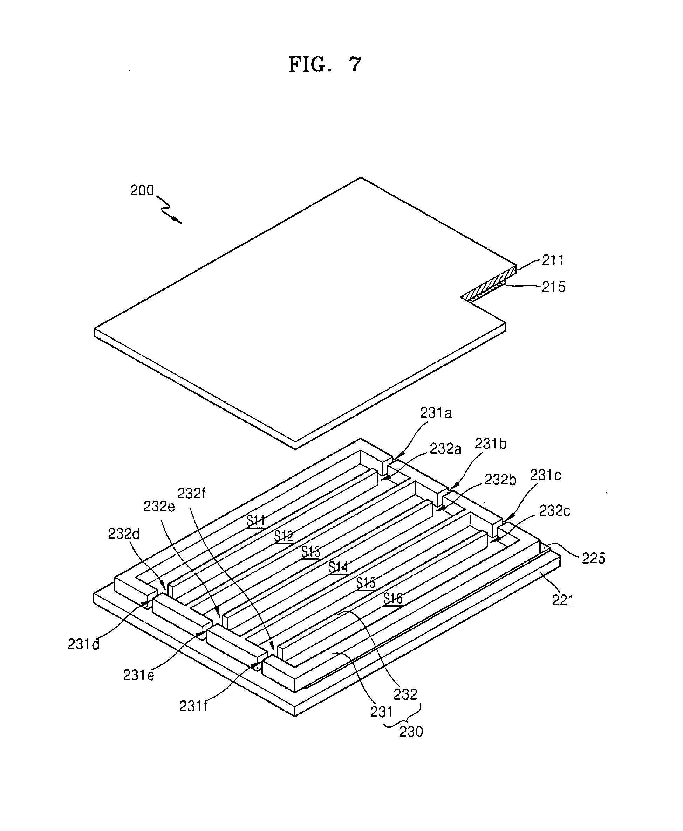

Alternatively, as shown in FIG. 7, electrolyte inlets 231a, 231b, 231c, 231d, 231e, and 231f may be formed at both ends of each sealing member 230 of the photoelectric conversion module 200.

Sealing members 230 formed between a light receiving substrate 210 and an opposite substrate 220 separate the plurality of photoelectric cells S11, S12, S13, S14, S15, and S16 while maintaining a predetermined interval therebetween. The sealing members 230 may be formed of glass frit, a resin material, or the like. Examples of the resin material may include a thermosetting resin such as epoxy, a photocurable resin such as ultra violet (UV) hardening epoxy, and a thermo film formed of a thermosetting resin. In this case, the thermo film formed of a thermosetting resin may be formed of ethylene meta acrylic acid copolymer ionomer, modified polyolefin, or the like. In this case, the thermo film may be disposed between the light receiving substrate 210 and the opposite substrate 220, and then the light receiving substrate 210 and the opposite substrate 220 may be pressurized by applying a predetermined amount of heat and pressure thereto to form the sealing members 230.

According to the present embodiment, since the electrolyte inlets 231a, 231b, and 231c are not formed in the light receiving substrate 210 or the opposite substrate 220, a separate step of making a hole in the light receiving substrate 210 or the opposite substrate 220 does not have to be performed. Instead, according to the present embodiment, the sealing members 230 may be simply formed having the electrolyte inlets 231a, 231 b, and 231c and the opened portions 232a, 232b, and 232c, thereby simplifying a manufacturing process.

The electrolyte 250 may be injected in various methods.

With reference to FIG. 6, an example of a method of injecting the electrolyte 250 will now be described. After a substrate assembly including the light receiving substrate 210 and the opposite substrate 220 is erected so that a side of the light receiving substrate 210 where the electrolyte inlets 231 a, 231 b, and 231c are formed may be directed upwards, the electrolyte 250 may be injected through the electrolyte inlets 231 a, 231 b and 231 c by using a special pressurizing installment for injecting the electrolyte 250.

'J'Jith reference to FIG. 6, another example of the method of injecting the electrolyte 250 will now be described. A substrate assembly including the light receiving substrate 210 and the opposite substrate 220 is immersed in a bath filled with an electrolyte while a side of the light receiving substrate 210 where the electrolyte inlets 231a, 231 b, and 231 c are formed may be directed downwards. A vacuum pressure or a negative pressure is applied to a sealed chamber surrounding the bath and the substrate assembly by using a negative pressure installment, and then the chamber is opened to an atmosphere pressure. Thus, the electrolyte filled in the bath may be injected into the substrate assembly due to a pressure difference between inside and outside of the substrate assembly.

With reference to FIG. 7, another example of the method of injecting the electrolyte 250 will now be described. A substrate assembly is erected so that the electrolyte inlets 231a, 231b, and 231c at one side of the substrate assembly may be directed upwards, and electrolyte inlets 231d, 231e, and 231f at another side may be directed downwards. An electrolyte is injected by applying a negative pressure to the electrolyte inlets 231 a, 231 b, and 231 c and applying a positive pressure to the electrolyte inlets 231d, 231e, and 231f. Then, the electrolyte inlets 231 a, 231 b, and 231 c are sealed, the substrate assembly is turned upside down, and then the electrolyte inlets 231d, 231e, and 231f are sealed.

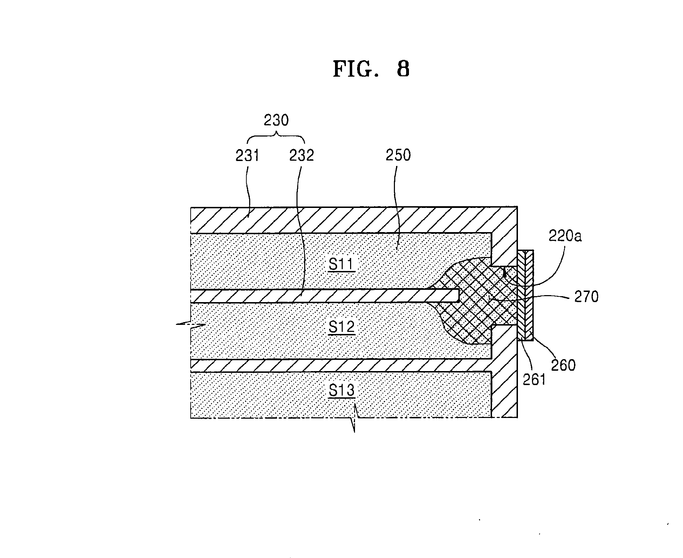

Electrolyte inlets are sealed as follows. Referring to FIG. 8, the electrolyte inlets 231 a, 231 b, and 231 c, and the opened portions 232a, 232b, and 232c are filled with fillers 270, and the fillers 270 are hardened to spatially separate the neighboring photoelectric cells S11 and S12 and to prevent the electrolyte 250 from leaking. According to the present embodiment, the fillers 270 may be an absorption filler. The fillers 270 may be formed of glass frit.

The fillers 270 are hardened, and then the electrolyte inlets may be sealed by cap members 260. For example, the cap members 260 may be attached onto the fillers 270 by interposing seals 261 between the cap members 260 and the fillers 270. The cap members 260 may be a glass plate or a metal film, and may prevent external harmful components such as oxygen or moisture from penetrating into the photoelectric conversion module 200.

### [Third Embodiment]

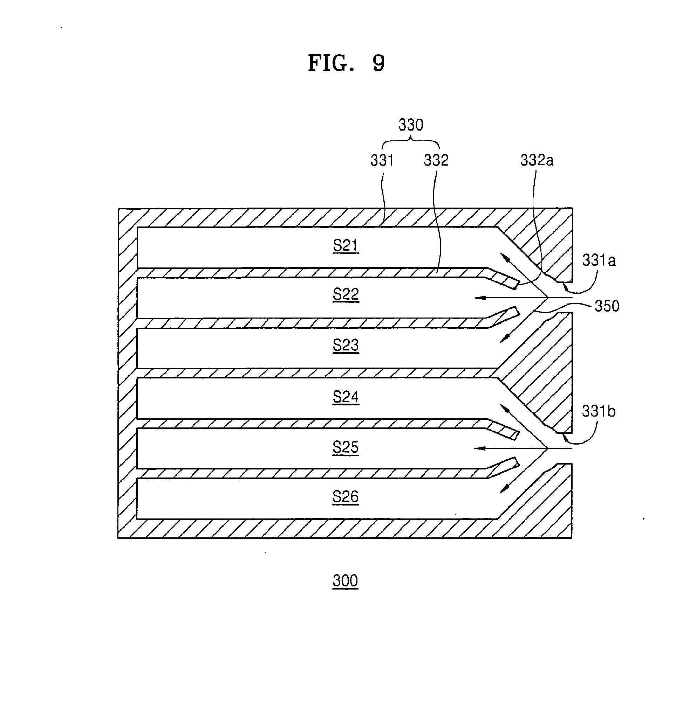

FIG. 9 is a schematic plan view showing spreading directions of an electrolyte 350 injected through electrolyte inlets 331 a and 331 b in a photoelectric conversion module 300, according to yet another embodiment of the present invention. Referring to FIG. 9, the electrolyte inlets 331 a and 331 b are respectively formed at one side of three neighboring photoelectric cells S21, S22, and S23 so that the electrolyte 350 injected through electrolyte inlets 331a and 331 b formed at one side of the photoelectric conversion module 300 may be introduced to the three neighboring photoelectric cells S21, S22 and S23. In addition, sealing members set for separating the neighboring photoelectric cells S21, S22, and S23 includes an opened portion 332a so that a fluid may flow between the neighboring photoelectric cells S21, S22, and S23. Thus, only two electrolyte inlets 331 a and 331 b may be formed for the six photoelectric cells S21, S22, S23, S24, S25, and S26. According to the present embodiment, the number of electrolyte inlets may be 1/6th of the number of electrolyte inlets in Comparative Example, wherein 12 electrolyte inlets are respectively formed in photoelectric cells.

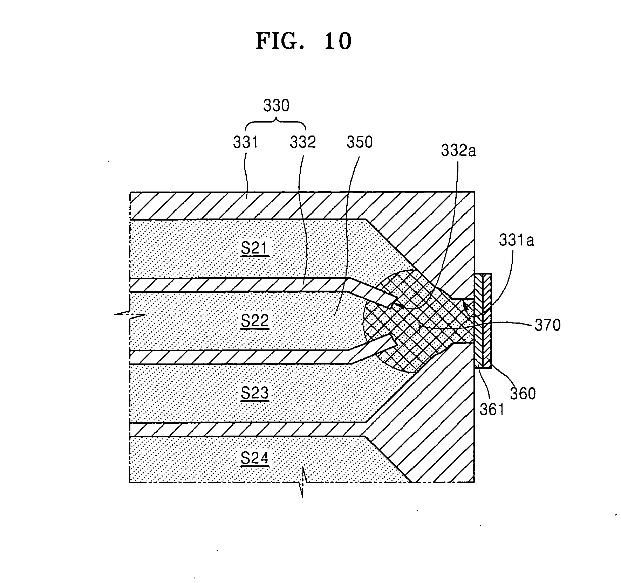

FIG. 10 is a plan view showing a case where the electrolyte inlet 331a and the opened portion 332a are sealed in the photoelectric conversion module 300 of FIG. 9. A step of sealing the electrolyte inlet 331a and the opened portion 332a is understood with reference to FIG. 8.

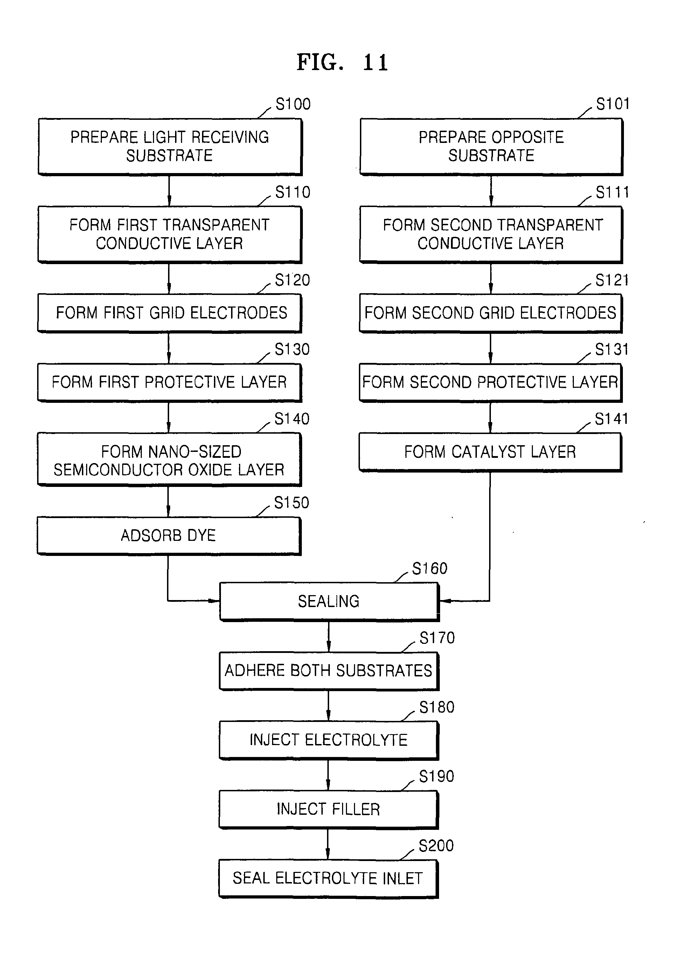

FIG. 11 is a flow chart showing a method of manufacturing a photoelectric conversion module, according to an embodiment of the present invention.

The photoelectrode 111 and the semiconductor oxide layer 113 are formed on the light receiving substrate 110 or 210 (Steps S100 to S150), the opposite electrode 121 and the catalyst layer 123 are formed on the opposite substrate 120 (Steps S101 to S141), the light receiving substrate 110 and the opposite substrate 120 are adhered and sealed to each other (Steps S160 and S170), the electrolytes 150, 250, or 350 are injected into the photoelectric cells S1, S2, S3, S4, S5, and S6, or S11, S12, S13, S14, S15, and S16, or S21, S22, S23, S24, S25, and S26 through the electrolyte inlets 110a, 110b, and 110c, or 220a, 220b, and 220c, or 331 a and 331 b (Step S180), and then the fillers 150, 250, or 350 are injected into the electrolyte inlets 110a, 110b, and 110c, or 220a, 220b, and 220c, or 331a and 331b (Step S190) to seal the electrolyte inlets 110a, 110b, and 110c, or 220a, 220b, and 220c, or 331 a and 331 b (Step S200), thereby completing the manufacture of a solar cell.

A method of forming the photoelectrode 111 on the light receiving substrate 110 will now be described. First, a first transparent conductive layer (not shown) formed of a material such as an ITO or an FTO is formed on the light receiving substrate 110, which may be a transparent glass (Step S110). First grid electrodes (not shown) formed of Ag or Al are formed parallel to each other in one direction on the first transparent conductive layer (S120). The first grid electrodes may be formed in a stripe pattern, but the arrangement of the first grid electrodes may be modified in various ways. A first protective layer (not shown) for protecting the first grid electrodes may be formed on the first grid electrodes (Step S130). A nano-sized semiconductor oxide layer is formed on the first transparent conductive layer and the first protective layer (Step S140). The nano-sized semiconductor oxide layer may be a TiO₂ layer, an SnO₂ layer, or a ZnO layer. Dye molecules are adsorbed onto the nano-sized semiconductor oxide layer (Step S150). The dye molecules are adsorbed onto the nano-sized semiconductor oxide layer by immersing the nano-sized semiconductor oxide layer of the light receiving substrate 110 in a dye.

A method of forming the opposite electrode 121 on the opposite substrate 120 will now be described. First, a second transparent conductive layer (not shown) formed of a material such as ITO or FTO is formed on the opposite substrate 120, which may be a transparent glass (Step S111). Second grid electrodes formed of Ag or Al are formed parallel to each other in one direction on the second transparent conductive layer (Step S121). The second grid electrodes may be formed in a stripe pattern, but the arrangement of the second grid electrodes may be modified in various ways. A second protective layer (not shown) for protecting the second grid electrodes is formed on the second grid electrodes (Step S131). The catalyst layer 123 is formed on the second grid electrodes and the second protective layer (Step S141). The catalyst layer 123 may be a platinum (Pt) layer, or a carbon (C) film.

The above-described methods of forming the photoelectrode 111 on the light receiving substrate 110 and forming the opposite electrode 121 on the opposite substrate 120 are just exemplary. If methods of forming a photoelectrode and an opposite electrode are modified by one of ordinary skill in the art, the methods are within the scope of the one or more of the above embodiments of the present invention.

It should be understood that the embodiments described therein should be considered in a descriptive sense only and not for purposes of limitation. Descriptions of features or aspects within each embodiment should typically be considered as available for other similar features or aspects in other embodiments.

## Claims

1. A photoelectric conversion module (100) comprising:
a first substrate (110);
a second substrate (120) opposing the first substrate (110);
a first photoelectric cell (S1) located between the first and second substrates (110, 120) and containing electrolyte;
a second photoelectric cell (S2) located between the first and second substrates (110, 120) and containing electrolyte; and
a first wall (132), located between the first and second substrates (110, 120) and separating the first photoelectric cell (S1) from the second photoelectric cell (S2); **characterised in that**
the first wall (132) comprises a first discontinuity (132a) extending from the first photoelectric cell (S1) to the second photoelectric cell (S2); and
the first discontinuity (132a) comprises a first obstruction (170) for preventing electrolyte from flowing between the first and second photoelectric cells (S1, S2).

2. A photoelectric conversion module (100) according to Claim1, wherein the said first obstruction (170) is formed from a filler material.

3. A photoelectric conversion module (100) according to Claim 1 or 2, wherein one of the first and second substrates (110, 120) or a second wall (231) located between the first and second substrates (110, 120) comprises a second discontinuity (110a; 231 a) located adjacent the first discontinuity (132a), the said second discontinuity (110a; 231 a) being juxtaposed with the first discontinuity (132a).

4. A photoelectric conversion module (100) according to Claim 3, wherein the said second discontinuity (110a; 231 a) is filled with a filler material.

5. A photoelectric conversion module (100) according to Claim 3 or 4, wherein the said second discontinuity (110a; 231a) is sealed with a cap member (160).

6. A photoelectric conversion module (100) according to any preceding claim, wherein the said first wall (132) comprises a third discontinuity (132a) extending from the first photoelectric cell to the second photoelectric cell, the said third discontinuity (132a) comprising a second obstruction (170) for preventing electrolyte from flowing between the first and second photoelectric cells (S1, S2).

7. A photoelectric conversion module (100) according to Claim 6, wherein the said second obstruction (170) is formed from a filler material.

8. A photoelectric conversion module (100) according to Claim 6 or 7, wherein one of the first and second substrates (110, 120) or a third wall located between the first and second substrates (110, 120) comprises a fourth discontinuity (110a; 231a) located adjacent the third discontinuity (132a), the said fourth discontinuity (110a; 231 a) being juxtaposed with the third discontinuity (132a).

9. A photoelectric conversion module (100) according to any preceding claim, comprising:
a third photoelectric cell (S3) located between the first and second substrates (110, 120) and containing electrolyte; and
a fourth wall (132) located between the first and second substrates (110, 120) and separating the second photoelectric cell (S2) from the third photoelectric cell (S3); wherein
the fourth wall (132) comprises a fifth discontinuity (332a) extending from the second photoelectric cell to the third photoelectric cell; and
the fifth discontinuity (332a) comprises a third obstruction (370) for preventing electrolyte from flowing between the second and third photoelectric cells (S2, S3).

10. A photoelectric conversion module (100) according to Claim 9 when dependent upon Claim 3, wherein the said fifth discontinuity (332a) is juxtaposed with the said second discontinuity (110a; 231 a).

11. A photoelectric conversion module (100) according to Claim 9 or 10, wherein the said third obstruction (370) is formed from a filler material.

12. A method of forming a photoelectric conversion module (100), the said method comprising:
providing first photoelectric cell components (115) on a first substrate (110);
providing second photoelectric cell components (125) on a second substrate (120);
assembling the said first and second substrates (110, 120) together with a first wall (132) therebetween, so as to define a first photoelectric cell (S1) on a first side of the first wall (132) and a second photoelectric cell (S2) on a second side of the first wall (132), with at least one said first photoelectric cell component (115) and one said second photoelectric cell component (125) facing into each of the first and second photoelectric cells (S1, S2); and
supplying both the first photoelectric cell (S1) and the second photoelectric cell (S2) with electrolyte via a first discontinuity (132a) provided in the first wall (132) and a second discontinuity (110a; 231a) provided in one of the substrates (110, 120) or a second wall (231) located between the first and second substrates (110, 120).

13. A method according to Claim 12, further comprising filling the said first discontinuity (132a) with a filler material after the supply of the electrolyte.

14. A method according to Claim 12 or 13, comprising filling the said second discontinuity (110a; 231 a) with a filler material after the supply of the electrolyte.

15. A method according to one of Claims 12 to 14, comprising sealing the second discontinuity (110a; 231a) with a cap member (160) after the supply of the electrolyte.
